(19) Europäisches Patentamt
European Patent Office
Office européen des brevets

(11) **EP 3 281 070 B1**

(12) **FASCICULE DE BREVET EUROPEEN**

(45) Date de publication et mention
de la délivrance du brevet:
**23.12.2020 Bulletin 2020/52**

(51) Int Cl.:
***G05B 17/02*** *(2006.01)* ***B21D 26/06*** *(2006.01)*
***B21D 26/055*** *(2011.01)*

(21) Numéro de dépôt: **16730871.7**

(22) Date de dépôt: **07.04.2016**

(86) Numéro de dépôt international:
**PCT/FR2016/050806**

(87) Numéro de publication internationale:
**WO 2016/162642 (13.10.2016 Gazette 2016/41)**

(54) **PROCÉDÉ DE PILOTAGE D'UNE MACHINE DE FORMAGE SUPERPLASTIQUE ET MACHINE CORRESPONDANTE**

VERFAHREN ZUR STEUERUNG EINES SUPERPLASTISCHEN FORMMASCHINE UND ENTSPRECHENDE MASCHINE

METHOD OF CONTROLLING A SUPERPLASTIC FORMING MACHINE AND CORRESPONDING MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2015 FR 1553052**

(43) Date de publication de la demande:
**14.02.2018 Bulletin 2018/07**

(73) Titulaires:
• **Aurock**
 **81000 Albi (FR)**
• **ASSOCIATION POUR LA RECHERCHE ET LE DEVELOPPEMENT DES METHODES ET PROCESSUS INDUSTRIELS (ARMINES)**
 **F-75006 Paris (FR)**

(72) Inventeurs:
• **NAZARET, Fabien**
 **81800 Coufouleux (FR)**
• **LEBARD, Etienne**
 **81000 Albi (FR)**
• **LE MAOULT, Yannick**
 **81000 Albi (FR)**
• **PENAZZI, Luc**
 **31500 Toulouse (FR)**
• **VIDAL, Vanessa**
 **81000 Albi (FR)**
• **VELAY, Vincent**
 **81990 Carlus (FR)**

(74) Mandataire: **Godard, Xavier**
**COLBERT INNOVATION TOULOUSE**
**2ter Rue Gustave de Clausade, BP 30**
**81800 Rabastens (FR)**

(56) Documents cités:
**EP-A1- 2 851 139     WO-A1-99/66095**
**US-A- 5 202 837     US-A1- 2005 252 263**
**US-A1- 2006 086 774     US-B1- 6 519 992**

EP 3 281 070 B1

**Description**

La présente invention se rapporte à une machine utilisée lors d'un procédé de formage superplastique.

Pour la réalisation de certaines pièces métalliques, la construction aéronautique utilise parfois le procédé de formage superplastique. Ce procédé est basé sur la capacité de certains alliages, par exemple à base de titane, à supporter une déformation importante. Ces alliages, appelés par la suite alliages superplastiques, peuvent atteindre des allongements allant parfois au-delà de 1000% sous certaines conditions de température, de pression et de vitesse de déformation alors que les matériaux à comportement non superplastique se déforment généralement uniquement de l'ordre de 20%.

Pour réaliser une pièce avec un alliage superplastique, un procédé de formage connu de l'homme du métier prévoit qu'une ébauche (tôle plane par exemple) est pincée entre une cuve et un couvercle. Cet ensemble est maintenu étanche par pression mécanique sous une presse. En exerçant alors une pression, par mise sous pression d'un espace se trouvant entre le couvercle et la tôle par un gaz neutre, la tôle se déforme pour venir épouser une matrice logée dans la cuve. La pression et la température (de l'ordre de 900°C pour des alliages de titane) doivent être parfaitement maîtrisées lors du procédé de formage pour maitriser la vitesse de déformation qui permettra d'obtenir de grandes déformations. Le cycle dure ainsi classiquement environ une heure. Dans toute la description, le terme de « *tôle* » désigne l'élément en matériau superplastique subissant le procédé de formage ; le terme *« ébauche »* se réfère à la tôle au début du procédé de formage, n'ayant pas encore subi de déformation, tandis que le terme « *pièce finale* » se réfère à la tôle en fin de procédé de formage.

Classiquement, l'ensemble de l'outillage composé de la cuve, y compris la matrice, et du couvercle est monté à une température uniforme de formage. Cet ensemble souvent réalisé en acier réfractaire et pouvant peser plusieurs tonnes nécessite plusieurs heures de chauffage. Une fois la température cible de l'outillage atteinte, le couvercle est soulevé par le coulisseau et une ébauche est posée sur la cuve puis pincée entre la matrice et le couvercle (le pincement assure une étanchéité permettant la mise en pression d'un gaz neutre entraînant le déplacement de la tôle) avant de subir le poinçon gazeux. Cette ouverture de l'outillage provoque une petite baisse de la température et il est donc nécessaire d'attendre que l'outillage remonte en température. La tôle étant très mince, d'épaisseur usuellement comprise entre 1 et 6 mm, il est considéré qu'elle est à la température de l'outillage. Celle-ci est contrôlée par plusieurs thermocouples insérés dans la cuve et le couvercle. Les températures sont régulées par des régulateurs PID (régulateur ou correcteur Proportionnel Intégral Dérivé) qui pilotent des résistances chauffantes placées dans des blocs métalliques ou céramiques sur lesquels sont fixés les éléments de l'outillage.

US2006/0086774 divulgue une machine de formage superplastique comprenant de telles résistances chauffantes (câbles électriques) noyées dans la matrice de la machine.

Cette conception est très énergivore car elle nécessite de maintenir plusieurs tonnes d'acier réfractaire aux environs de 900°C et cela malgré les ouvertures/fermetures de presse nécessaires pour placer et démouler la tôle. Ce procédé est également couteux car les temps morts hors cycle de formage sont nombreux (montée en température, stabilisation de la température après ouverture) et pénalisent les coûts de production. Ainsi, plusieurs techniques ont été développées pour venir chauffer directement la tôle et se dispenser de monter en température l'outillage complet. Il s'agit notamment du chauffage direct de la tôle par induction comme proposé dans US5410132 ou par émetteurs infrarouges comme décrit dans US4474044. Ce chauffage de la tôle permet de gagner en temps de cycle de manière conséquente car il n'est plus nécessaire de monter en température tout l'outillage.

Dans le cas du chauffage infrarouge, la régulation de la température de la tôle est difficile en cours de formage. US4474044 propose que des capteurs de type fibre optique isolés thermiquement relèvent la température de la tôle in-situ. Or, en cours de formage, la distance capteur/ tôle varie et l'émissivité de la tôle évolue du fait de l'oxydation plus ou moins marquée de celle-ci selon les conditions opératoires. Il en résulte que la mesure de température devient faillible en cours de formage.

US2003/0000275 propose de suivre par caméra IR la distribution de température pour réguler le chauffage de la tôle. Or, l'utilisation de cette technique nécessite la présence de hublots supplémentaires dans le couvercle ce qui complique largement l'implantation des éléments chauffants, la définition des zones de chauffe et la technologie globale du couvercle dans un environnement de presse qui assure l'étanchéité.

De plus, si l'outillage n'est pas à la température cible de la tôle, le rayonnement de la tôle lors de sa montée en température va introduire un gradient de surface sur l'outillage qui va perturber le champ de température de la tôle lors de la mise en contact.

Cette difficulté à obtenir des données en température fiables et l'apparition d'un gradient de températures en raison de la présence d'un outillage à une température inférieure compliquent la régulation de la puissance des émetteurs pour obtenir une température de tôle homogène.

Si la température superplastique de la tôle n'est pas garantie, le formage peut être raté provoquant des phénomènes de striction menant à des ruptures locales ou introduisant des gradients de microstructures qui détérioreront les propriétés mécaniques de la pièce finale.

L'invention vise à pallier ces inconvénients en proposant un procédé de pilotage qui permette de garantir une température cible de la tôle lorsqu'elle est chauffée par des organes de chauffage direct, par exemple par rayonnement infra-rouge ou par laser, et avec la présence éventuelle d'une matrice à température inférieure.

L'invention concerne un procédé de pilotage d'une machine de formage superplastique pour l'impression d'une forme à donner dans une tôle, laquelle machine de formage superplastique comprend :

- un couvercle,
- une cuve,
- une presse et des moyens périphériques de serrage comprenant un joint périphérique, à la fois pour le maintien par pincement de la tôle à sa périphérie, entre la cuve et le couvercle, et pour l'étanchéité d'une chambre de formage délimitée par la tôle ; à noter que la chambre de formage peut être située au-dessus de la tôle, entre le couvercle et la tôle auquel cas la cuve peut recevoir une matrice inférieure ; en variante, la chambre de formage peut être située en dessous de la tôle, entre la tôle et la cuve comme dans EP 703019 auquel cas le couvercle peut recevoir une matrice supérieure ; il est également possible de prévoir deux chambres de formage, l'une au-dessus et l'autre en dessous de la en tôle comme dans US2003/0000275 ;
- des organes de chauffage direct par rayonnement, par exemple par rayonnement infrarouge (IR) ou par laser ou autres rayonnements, agencés en regard de la tôle ; ces organes de chauffage sont par exemple installés sous le couvercle dans le cas où la chambre de formage est située entre le couvercle et la tôle ;
- un conduit de gaz pour la régulation de la pression dans la chambre de formage,
- et un automate de contrôle pour le contrôle à la fois de la puissance de chauffage des organes de chauffage et de la pression dans la chambre de formage.

Le procédé selon l'invention est caractérisé en ce qu'il comprend les étapes suivantes :

✓ détermination d'une configuration initiale de chauffage comprenant par exemple la forme à donner, une architecture des organes de chauffage, une épaisseur de l'ébauche (tôle avant déformation), une architecture du couvercle, etc ;

✓ simulation par éléments finis portant sur la température de la tôle et effectuée de façon à avoir une température sensiblement homogène sur la tôle et sensiblement constante au cours du formage, pour l'obtention d'une recette de formage comprenant au moins un cycle de puissance des organes de chauffage direct par rayonnement et un cycle de pression de la chambre de formage ;

✓ programmation de l'automate de contrôle en fonction de la recette de formage fournie par la simulation.

En fonction de la forme à donner à la tôle, on détermine tout d'abord une configuration initiale de chauffage. Cette étape consiste à choisir :

- une architecture des organes de chauffage : nombre d'organes, type des organes (infra-rouge ou autre longueur d'onde, laser, etc), puissance maximale pouvant être délivrée, disposition des organes (répartition en zones parallèlement à la tôle, distance initiale par rapport à la tôle, etc). Ainsi par exemple, on pourra prévoir une plus grande densité ou une plus grande puissance d'organes de chauffage en regard de zones de la tôle devant subir des déformations plus importantes ; à noter qu'il est possible de combiner différents types d'organes et/ou différentes puissances ;
- une architecture du couvercle : couvercle monobloc ou non, matériau(x), forme, présence ou non de réflecteurs, etc.
- une épaisseur de l'ébauche,
- le cas échéant, une architecture de la matrice. La forme de la face supérieure de la matrice est imposée, elle correspond à la forme à donner à la tôle, mais d'autres données peuvent être choisies pour la matrice : épaisseur, matériau, température initiale, présence ou non d'éléments de chauffage par conduction intégrés dans la matrice, etc. La température initiale de la matrice est de préférence choisie arbitrairement ; il peut s'agir de la température ambiante afin de s'affranchir de toute phase de chauffage préalable de la matrice.

Dans le cas d'une machine de formage superplastique dont le couvercle comprend une âme et un revêtement réflecteur (couvercle non monobloc), les données relatives à l'architecture du couvercle dans la configuration initiale comprennent avantageusement la nature du matériau de l'âme, ainsi que le nombre, la géométrie et la disposition des réflecteurs.

Les principales contraintes dans le choix de la configuration initiale de chauffage sont la taille et la complexité de la pièce à former et l'énergie nécessaire pour monter l'ébauche en température.

Pour réussir à obtenir une température de tôle constante au cours du formage, l'invention propose de s'appuyer sur une simulation par éléments finis de l'ensemble du procédé. Cette phase d'optimisation du chauffage doit permettre de déboucher sur une recette de formage telle que précédemment définie (cycle de puissance thermique + cycle de pression) et cela en fonction des déplacements de la tôle pendant le formage.

La simulation par éléments finis comprend avantageusement, pour chaque organe de chauffage, une optimisation de la puissance de chauffage via, au choix :

(i) l'introduction, dans la simulation par éléments finis, d'un correcteur PID numérique (où PID désigne de façon usuelle « Proportionnel Intégral Dérivé ») ayant comme consigne une valeur de température (de la tôle) homogène et de préférence constante au cours du formage. A noter qu'il est possible de prévoir, dans la configuration initiale de chauffage, une ou plusieurs zones de chauffage comprenant chacune plusieurs organes de chauffage. Dans ce cas, un même correcteur PID est utilisé pour les différents organes de chauffage d'une même zone et les correcteurs PID peuvent être différents d'une zone à l'autre.

(ii) La minimisation de la fonctionnelle des moindres carrées en flux soit par projection soit par optimisation (algorithme du Gradient, de Levenberg-Marquardt...) soit en couplant les deux méthodes de minimisation précédentes pour viser une température homogène et de préférence constante au cours du formage.

Eventuellement, si aucune recette de formage n'est trouvée lors de l'étape de simulation, la configuration initiale de chauffage est révisée de façon à déterminer une nouvelle configuration, ce qui signifie que certaines données choisies sont changées (par ex. matériau du couvercle, nombre, répartition ou puissance maximale des organes de chauffage, épaisseur de l'ébauche, température initiale de la matrice, etc.) et la simulation par éléments finis est exécutée à nouveau avec cette nouvelle configuration.

Selon une caractéristique possible, l'étape de simulation comprend les phases préalables suivantes :

✔ détermination de conditions limites telles que le type des moyens de serrage ;
✔ détermination de lois physiques relatives à des propriétés de la tôle et/ou des organes de chauffage et/ou du couvercle, en fonction de la configuration initiale de chauffage préalablement déterminée.

Par exemple, les lois physiques susmentionnées sont choisies parmi : des lois relatives au comportement thermomécanique du matériau de la tôle, des lois relatives aux propriétés thermo-optiques du matériau de la tôle de la température ambiante à la température de formage, des lois relatives aux propriétés thermo-optiques des organes de chauffage, des lois relatives aux propriétés thermo-optiques du couvercle, etc.

Par ailleurs, dans le cas d'une machine de formage superplastique comprenant une matrice inférieure, logée dans la cuve et ayant une face supérieure reproduisant en creux la forme à donner à la tôle, ou dans le cas d'une machine de formage superplastique comprenant une matrice supérieure, logée dans le couvercle et ayant une face inférieure reproduisant en creux la forme à donner à la tôle, les conditions limites déterminées comprennent de plus avantageusement la température de la matrice (inférieure ou supérieure) et les propriétés thermomécaniques du contact tôle/matrice (coefficient de frottement entre autres).

L'invention s'étend à une machine de formage superplastique pilotée selon l'invention.

L'invention s'étend à un dispositif et un procédé de pilotage d'une machine de formage superplastique et à une machine de formage superplastique pilotée caractérisés en combinaison par tout ou partie des caractéristiques mentionnées ci-avant et ci-après.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

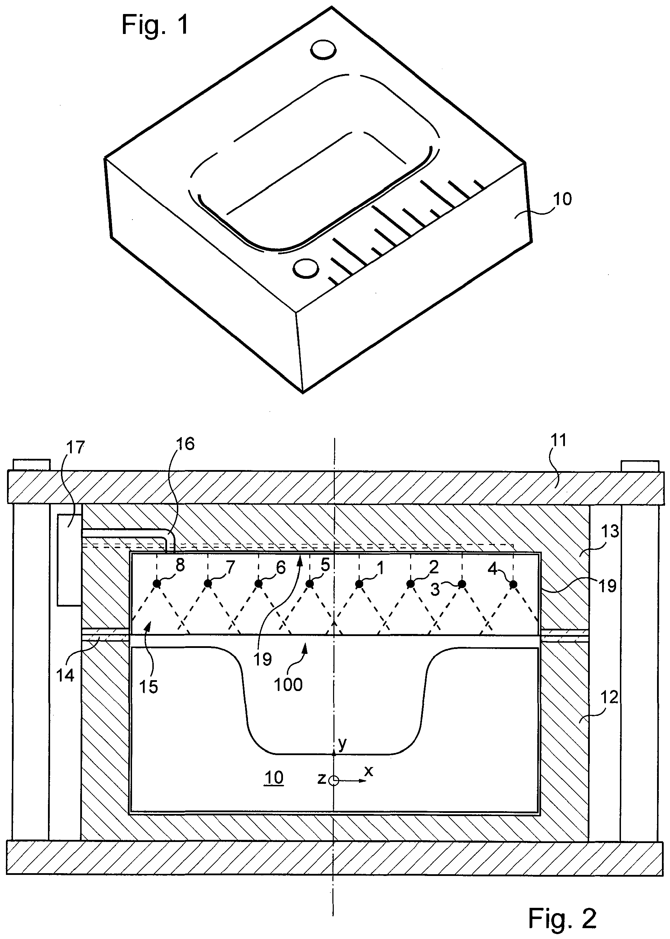

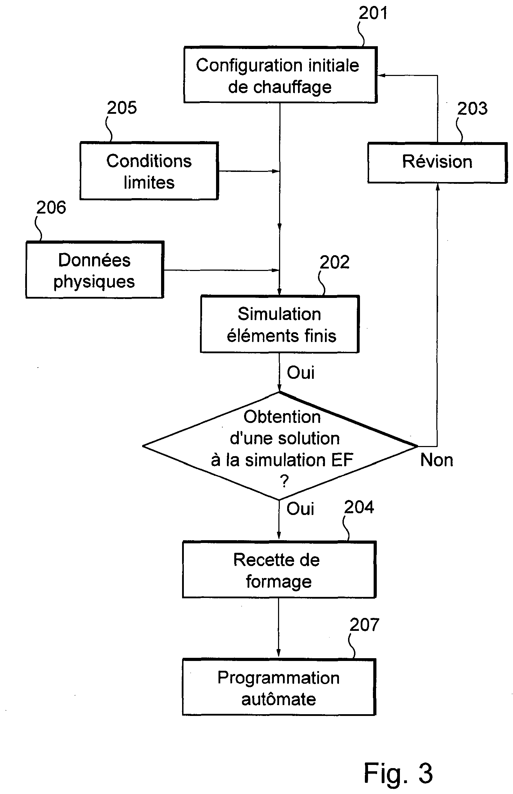

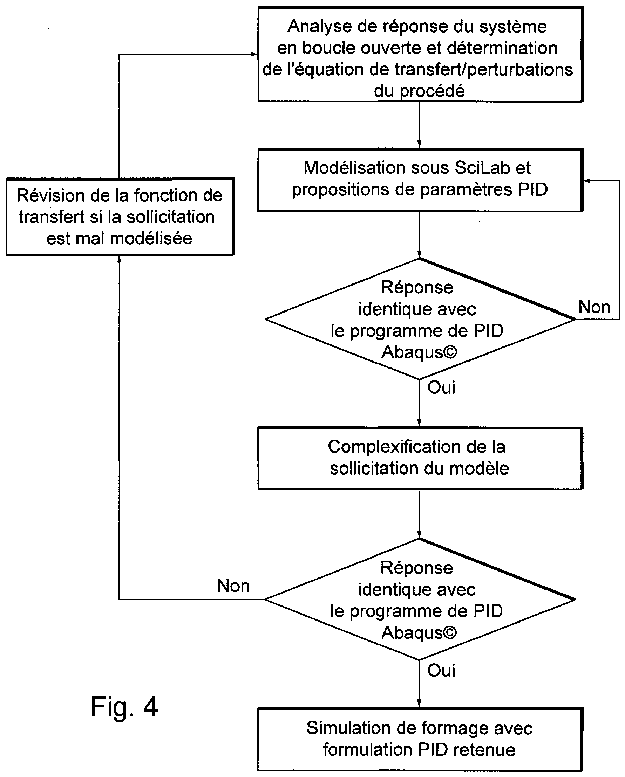

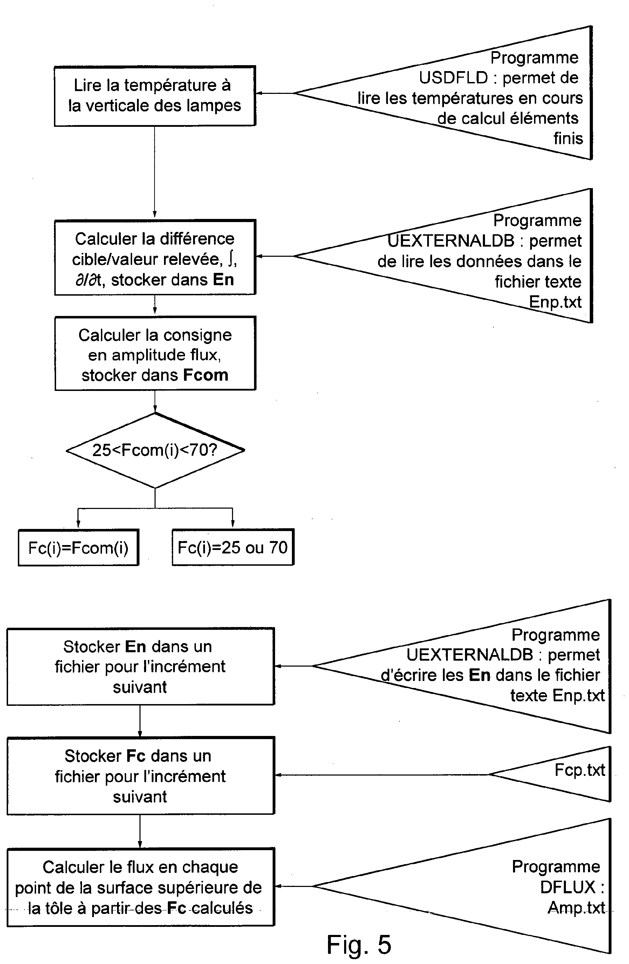

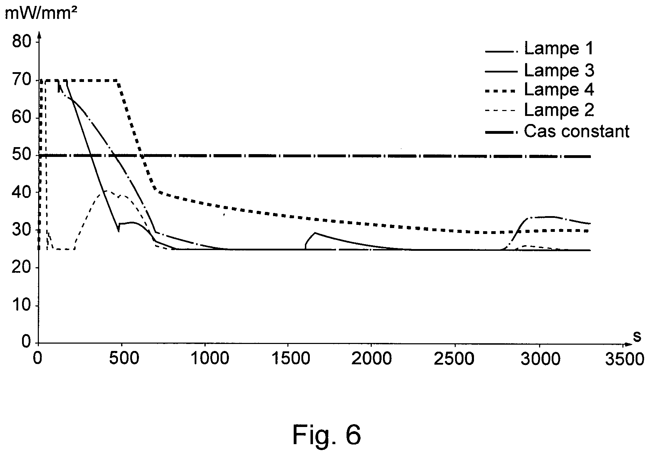

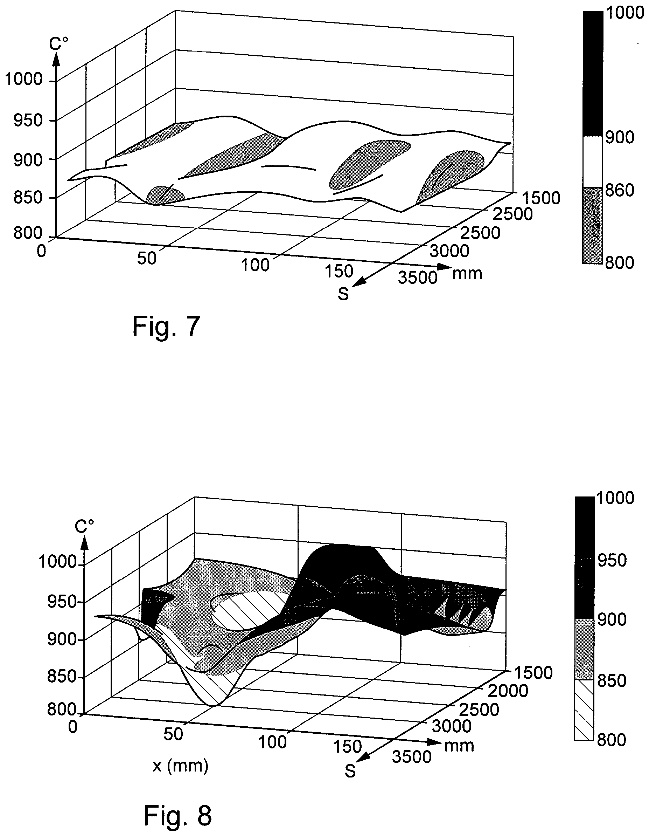

✔ La figure 1 est une vue en perspective d'une matrice inférieure pour la formation d'une pièce ;
✔ La figure 2 est une vue schématique en coupe verticale d'une machine de formage superplastique pouvant être utilisée avec un dispositif de pilotage selon l'invention ;
✔ la figure 3 est un organigramme représentant un procédé de pilotage selon l'invention ;
✔ la figure 4 est un schéma de principe représentant le processus de réglage d'un PID numérique dans une simulation par éléments finis mise en œuvre selon l'invention ;
✔ la figure 5 est un schéma de principe représentant l'implantation d'un PID numérique dans une simulation par éléments finis mise en œuvre selon l'invention ;
✔ la figure 6 est un diagramme illustrant, pour chaque lampe IR de la machine de la figure 2, l'intensité d'éclairement (en ordonnées) de la lampe au cours du formage (temps en abscisses) ;
✔ la figure 7 est un diagramme représentant une cartographie (en 3D) des températures de la tôle au cours du formage, c'est-à-dire un diagramme représentant, en ordonnées, la température de la tôle en fonction, en abscisses selon un première direction, du temps et en fonction, en abscisses selon une seconde direction, de la distance X par rapport au plan de symétrie YZ, lorsque les lampes sont régulées selon invention ;

✔ la figure 8 est un diagramme représentant une cartographie (en 3D) des températures de la tôle au cours du formage, c'est-à-dire un diagramme représentant (en ordonnées) la température de la tôle en fonction du temps (en abscisses selon une première direction) et en fonction de la distance X par rapport au plan de symétrie YZ (en abscisses selon une seconde direction), lorsque les lampes émettent à une puissance constante et égale pour toutes les lampes.

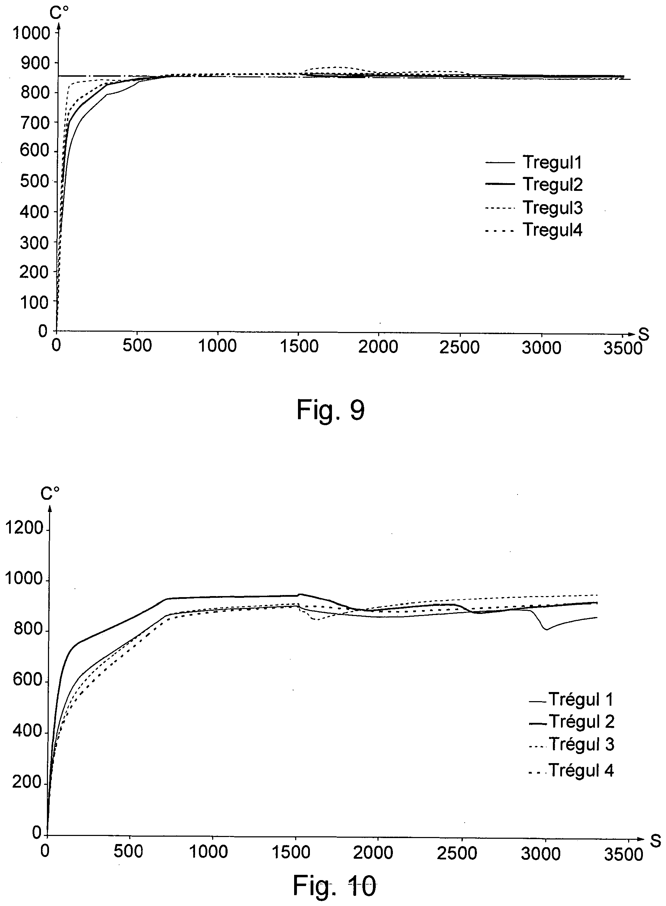

✔ la figure 9 est un diagramme illustrant l'évolution de la température du centre de la tôle lorsque les lampes sont régulées selon invention, ce diagramme représentant, pour chaque nœud utilisé par une subroutine pour la régulation, la température (en ordonnées) du nœud en fonction du temps (en abscisses) ;

✔ la figure 10 est un diagramme illustrant l'évolution de la température du centre de la tôle lorsque les lampes émettent à une puissance constante et égale pour toutes les lampes, ce diagramme représentant, pour chacun des nœuds définis à la figure 9, la température (en ordonnées) du nœud en fonction du temps (en abscisses).

Dans l'exemple non limitatif décrit ici, on souhaite former une pièce finale en alliage de titane TA6V ayant la forme donnée (en creux) par la matrice inférieure 10 illustrée à la figure 1, à partir d'une ébauche en tôle 100. La pièce finale et la matrice inférieure 10 présentent un plan de symétrie YZ.

Selon l'invention, dont le procédé est illustré à la figure 3, une configuration initiale de chauffage est tout d'abord déterminée (étape 201).

On prend ainsi par exemple pour hypothèse d'utiliser la machine de formage superplastique illustrée à la figure 2. Cette machine comprend une presse 11, une cuve 12 et un couvercle 13, en un matériau réfractaire (céramique, métal ou béton réfractaire, renforcé ou non), ainsi que des moyens périphériques de serrage comprenant un serre-flanc muni d'un joint périphérique métallique 14 assurant le pincement et le maintien de la tôle 100 à sa périphérie et l'étanchéité au gaz dans la zone de pincement de la tôle 100. L'espace délimité par le couvercle 13 et la tôle 100 est ainsi étanche au gaz et constitue une chambre de formage 15 (de volume variable) dans laquelle un gaz neutre, argon par exemple, peut être injecté sous pression par une entrée de gaz 16 ménagée dans le couvercle 13.

La machine de formage superplastique comprend également la matrice inférieure 10 logée dans la cuve 12. Cette matrice inférieure peut être chauffée directement, par des blocs presse inférieurs, par les émetteurs IR ci-après décrits, par la tôle 100 au fur et à mesure des cycles. Plus la température de la matrice inférieure 10 (ou autre outillage éventuel) est faible, plus le procédé est performant en termes de cadence et de coût énergétique. Pour cette raison, dans l'exemple décrit ici, aucun organe de chauffage dédié à la matrice inférieure 10 n'est prévu.

La machine de formage superplastique comprend de plus des organes de chauffage direct, de préférence disposés et réalisés de telle manière qu'il est possible de chauffer par zone. Dans le cadre de l'étape 201 de détermination d'une configuration initiale de chauffage, le nombre, le type, la disposition et la distance initiale par rapport à la tôle 100 des organes de chauffage sont choisis en fonction, notamment, de la forme de la matrice inférieure 10. Les principales contraintes dans ce choix sont la taille et la complexité de la pièce à former et l'énergie nécessaire pour monter la tôle en température.

En l'exemple illustré, la configuration initiale de chauffage choisie comprend huit lampes à infrarouge 1 à 8 (également notées « *émetteurs IR* » par la suite) de 3.4kW chacune. Compte tenu de la symétrie de la matrice inférieure 10 par rapport au plan YZ, les lampes IR sont choisies cylindriques d'axe directeur Z (axe de la longueur de la matrice inférieure 10) et sont régulièrement réparties de part et d'autre du plan de symétrie YZ. En d'autres termes, les lampes 1 à 8 sont disposées dans le sens de la longueur de la pièce à former, avec un espacement de 50 mm entre deux lampes successives. Elles se situent à 120 mm de la tôle 100 avant toute déformation de cette dernière. De plus, on suppose que le couvercle 13, choisi ici en acier, est recouvert, en regard de la tôle 100 et des lampes IR 1 à 8, de réflecteurs en silice 19 pour un éclairage accru de la tôle 100 et une meilleure efficacité de chauffage.

Pour réussir à obtenir une température de tôle constante au cours du formage, l'invention propose de s'appuyer sur une simulation éléments finis 202 de l'ensemble du procédé. Cette phase d'optimisation du chauffage doit permettre de déboucher sur une recette de formage 204 établissant une puissance de chauffe des émetteurs par zone. Si aucune solution n'est trouvée, il faut revoir l'architecture du couvercle en 203.

La simulation éléments finis 202 peut être réalisée avec un ou plusieurs codes éléments finis du commerce. Le logiciel doit pouvoir mettre en œuvre des simulations en couplage thermomécanique fort et des simulations thermiques avec échanges radiatifs intégrant les effets de facteurs de forme.

Pour alimenter ce calcul éléments finis, il faut

✔ fournir les données géométriques de la configuration initiale de chauffage définie en 201,

✔ préciser, en 205, les conditions limites, qui sont les paramètres de la mise en œuvre physique du procédé dont la température de la matrice inférieure 10, le type de serrage et les propriétés thermomécaniques du contact tôle/matrice et celles du contact tôle/joint périphérique,

✔ renseigner, en 206, toutes les propriétés thermo-optiques des émetteurs IR 1 à 8 et de l'environnement du couvercle 13 ainsi que les propriétés thermo-optiques et thermomécaniques du matériau constitutif de la tôle 100 (ce, de la température ambiante à la température de formage) et du matériau constitutif de la matrice inférieure 10.

Ainsi, une simulation du chauffage de la tôle et de son formage peut être réalisée en 202 en considérant tout l'environnement thermique de la tôle 100, c'est-à-dire les parois du couvercle 13, le système d'étanchéité 14 et la matrice inférieure 10. Ainsi, la température de la matrice inférieure 10 (ou autre outillage utilisé) est considérée.

Sur ce calcul de référence, il est alors possible de lancer une optimisation de la puissance des émetteurs au cours du formage pour assurer une température cible tout au long du formage et cela malgré la présence d'un outillage à une température inférieure.

Cette optimisation pourra être réalisée par la minimisation de la fonctionnelle des moindres carrés en flux soit par projection soit par optimisation soit en couplant les deux méthodes de minimisation précédentes afin de garantir une température homogène sur la tôle. Cependant, une telle approche est couteuse en temps de calcul.

En variante, l'optimisation pourra être réalisée en introduisant un PID dans la simulation éléments finis via une co-simulation ou un sous-programme utilisateur. Ce PID prend comme information d'entrée la température de la tôle au cours du formage et il régule la puissance des émetteurs IR. Le réglage des paramètres PID peut être mené directement dans le code éléments finis ou en amont via un logiciel de calcul scientifique en considérant une fonction de transfert du procédé. La simulation pourra comporter un ou plusieurs PID selon le nombre de zones à réguler. Avec cette approche, une seule simulation est nécessaire pour obtenir en 204 une recette de formage composée du cycle de puissance des émetteurs au cours du formage, par émetteur ou par zone selon la configuration retenue, et du cycle correspondant de pression du gaz dans la chambre de formage. Cette méthode permet d'optimiser le cycle de puissance des émetteurs en prenant en compte la présence de l'outillage (ici, la matrice inférieure 10) dont la température est plus faible et évolue au cours du cycle.

Ces cycles peuvent ensuite être entrés, en 207, dans l'automate 17 de la presse 11 qui pilote le formage de la tôle. Le cycle de puissance des émetteurs IR 1 à 8 sera ainsi imposé. Seuls des capteurs de contrôle (non représentés) donneront une information de température en cours du cycle dans des zones faciles d'accès pour les capteurs uniquement afin de s'assurer du bon respect du cycle donné par la simulation (et non pour tenter d'adapter en temps réel les puissances d'éclairement comme proposé dans l'art antérieur). Ces capteurs pourront être positionnés dans la matrice inférieure 10 ou à proximité des émetteurs IR 1-8 ou sur une zone qui ne se déforme pas ou peu de la tôle 100. La méthode décrite permet ainsi de s'affranchir des mesures antérieures de températures in-situ dans les zones déformées de la tôle, lesquelles mesures antérieures ne permettaient pas de pouvoir piloter correctement la température de la tôle, l'utilisation de ces mesures antérieures ayant échoué à obtenir une température homogène de la tôle, seule susceptible de fournir une pièce sans défaut.

Dans l'exemple précédemment décrit visant à fournir une pièce de démonstration épousant la forme de la matrice inférieure 10 de la figure 1, la température de formage cible est de 870°C.

Les lampes IR 1 à 8 et les plaques de revêtement 19 du couvercle sont caractérisées par une émissivité qui dépend de la température. Le matériau de la tôle 100, ici un alliage de titane TA6V, est aussi caractérisé par des propriétés thermo-optiques et thermomécaniques dépendant de la température. Le comportement mécanique est de type élastoviscoplastique.

Le PID numérique est implanté via un programme utilisateur codé en Fortran. Ce PID couplé au code éléments finis permettra de piloter un flux reçu afin de garantir une température homogène sur la tôle 100. Le logiciel commercial d'éléments finis connu sous le nom ABAQUS© est utilisé.

Les paramètres du PID numérique sont réglés grâce à un cas test de simulation d'une régulation d'une plaque plane en alliage de titane chauffée puis posée sur un bloc en béton réfractaire représentatif de la matrice inférieure 10. Le principe consiste à analyser la réponse du système en boucle ouverte (application d'un flux de chauffage non régulé), proposer des paramètres du PID (coefficient de proportionnalité K, constante de temps d'intégration Ti et constante de temps de dérivation Td) à partir d'une modélisation de la fonction de transfert du procédé dans le logiciel connu sous le nom SCILAB, les tester dans un programme utilisateur dans ABAQUS©, puis complexifier le modèle et voir si les paramètres restent pertinents. La première itération a permis de déterminer des paramètres K=23, Ti=0.01 s et Td=0 s. Le schéma de principe du processus de réglage du PID est montré à la figure 4.

Le principe du programme développé pour implanter le régulateur PID dans ABAQUS© est exposé à la figure 5. Dans cet exemple, les valeurs de flux sont bornées entre 25 et 70m W/mm$^2$.

La mise en œuvre de l'approche nécessite de manipuler plusieurs fichiers :

- Enp.txt : stockage de l'erreur entre la consigne et la mesure, son intégrale et sa dérivée à chaque fin d'incrément,
- Fcp.txt : stockage des intensités d'éclairement de chaque lampe à la fin de chaque incrément,
- Amp.txt : stockage à chaque incrément des intensités d'éclairement de chaque lampe pour post-traitement et reconstruction du profil spatial d'éclairement.

Des programmes utilisateurs ABAQUS© tels ceux connus sous les noms USDFLD et UEXTERNALDB permettent de lire et d'écrire dans les fichiers texte.

La valeur de commande de flux $F_{com}$ est donnée par la relation suivante :

$$F_{com}(i) = K_p * E_n(4i - 3) + T_i * E_n(4i - 2) + T_d * E_n(4i - 1)$$

Avec :

- $E_n(4i - 3)$ : différence cible/relevé au niveau de la lampe i
- $E_n(4i - 2)$ : intégrale de cette différence
- $E_n(4i - 1)$ : dérivée de cette différence
- $K_p$, $T_i$ et $T_d$ les paramètres du régulateur PID

À partir des valeurs de Fc(i) prescrites, ABAQUS© recalcule le profil d'éclairement selon la formule

$$Flux1(x) = \sum_1^4 Fc_i e^{-\left(\frac{x-\mu_i}{B_i}\right)^2}$$ ($\mu_i$=coordonnée x à la verticale des lampes, $B_i = k * Fc_i \left(1 - e^{-\frac{Fc_i}{F_{sat}}}\right)$, avec

$F_{sat}$ un paramètre de saturation correspondant au flux maximum. Ce profil de flux est imposé dans ABAQUS© avec un sous-programme de type DFLUX et permet de réaliser un incrément de calcul avec ce chargement.

Ainsi à chaque incrément, l'écart entre température imposée et consigne est calculé à chaque point régulé et le régulateur PID adapte le chargement en flux correspondant au dispositif de lampe choisi initialement.

Pour déterminer la courbe d'éclairement à imposer à chaque lampe IR 1 à 8, une simulation éléments finis en couplage thermomécanique fort est réalisée avec le logiciel ABAQUS©. Les conditions limites appliquées dans ce calcul ainsi que les propriétés thermomécaniques qui sont renseignées pour chaque matériau présent dans la simulation sont les suivantes pour l'exemple précédemment développé :

- ✓ tôle en TA6V 250 mm x1,4 mm. Les données matériau (densité, conductivité thermique, chaleur spécifique, paramètre de loi de fluage, module de Young, coefficient de Poisson) sont fonction de la température ;
- ✓ matrice inférieure 10 en béton. Les données matériau (densité, conductivité thermique, chaleur spécifique) sont fonction de la température ;
- ✓ entre la tôle 100 et la matrice inférieure 10 : échanges radiatifs (à distance) et conductifs (au contact entre la tôle 100 et la matrice inférieure 10) ; coefficient de frottement de 0,2 entre la matrice inférieure et la tôle ;
- ✓ couvercle et cuves en acier ; perte par convection et radiation du couvercle 3 et de la cuve 2 vers l'extérieur de la machine à température ambiante (20°C)
- ✓ dans la chambre de formage 15 : profil de pression optimisé et flux de chauffage (régulé ou non) sur la face supérieure de la tôle 100 ;
- ✓ à la face inférieure de la tôle : perte radiative de la tôle 100 avec une émissivité qui dépend de la température,
- ✓ perte par convection de la matrice intérieure 10 vers la température à l'intérieur de la cuve.

La simulation est effectuée dans la section centrale en 2D avec une hypothèse de déformations planes. Une symétrie dans le plan YZ est considérée. A l'état initial de la simulation, tout est à 20°C (température ambiante, ce qui signifie qu'on prend pour hypothèse qu'aucun chauffage préalable des outillages n'est effectué).

Au cours de l'opération de formage, on peut piloter la puissance des lampes. Afin d'être représentatif des possibilités réelles de pilotage du procédé, on asservira l'intensité d'éclairement de chacune des quatre lampes 1 à 4 du demi-modèle (un côté du plan de symétrie YZ) et non pas le profil d'éclairement en entier. La sortie régulée correspondra à la température des nœuds directement à la verticale des lampes. On se fixe comme température objectif 870°C. Le régulateur PID numérique décrit précédemment est donc mis en œuvre pour les quatre lampes du demi-modèle.

La simulation permet d'obtenir le profil de l'intensité d'éclairement des lampes illustré à la figure 6. Jusqu'à 1500 s, il s'agit de la phase de chauffage et de stabilisation en température et ensuite de la partie formage. Un cas avec la puissance des lampes fixée à une valeur constante (et égale pour chaque lampe) est également présenté à titre de comparaison afin d'évaluer l'apport des régulateurs PID. On constate que les évolutions d'éclairement des quatre lampes évoluent dans le temps et dépendent de leur position spatiale.

Les figures 7 et 8 permettent d'observer les cartographies de températures calculées dans une section de la tôle au cours du formage entre 1500 et 3500 secondes, la position 0 mm correspondant au plan de symétrie YZ. Avec une puissance de lampe constante (figure 8), on atteint une valeur moyenne sur cette phase (moyenne des températures de tous les points pour tous les incréments de calcul) de 901 °C mais avec un écart type de 35°C et des valeurs extrêmes de 820°C et 960°C. Avec la mise en œuvre des PID numériques (figure 7), une température moyenne de 862°C est obtenue (pour une cible de 870°C) avec un écart type de 17°C et des valeurs extrêmes de 830°C et 880°C.

On peut voir le gain en termes d'homogénéité et de contrôle de la température entre le cas où la puissance de chaque lampe est régulée selon l'invention (figure 7) et un cas où la puissance des lampes est maintenue constante et égale pour toutes les lampes (figure 8).

La comparaison des températures de la tôle aux nœuds de régulation (points situés au droit des différentes lampes) en cas de régulation selon l'invention (figure 9) aux températures des mêmes points dans le cas d'une puissance constante et égale pour toutes les lampes (figure 10) montre également que la régulation selon l'invention permet d'atteindre plus rapidement la température de formage et de maintenir correctement celle-ci (alors qu'elle varie plus fortement en l'absence de régulation selon l'invention). A noter que les références « *Trégul1* » à « *Trégul4* » apparaissant sur les figues 9 et 10 désignent la température des nœuds de régulation au droit, respectivement, des lampes 1 à 4 (voir Fig. 2 pour la position desdites lampes).

Une fois cette étape de simulation réalisée, l'évolution d'éclairement obtenue va permettre de piloter la puissance des lampes lors du formage en garantissant une température homogène au cours de celui-ci. Ainsi cette méthode de régulation permet de mettre en œuvre le chauffage direct de la tôle par lampes IR pour le formage superplastique en intégrant l'évolution de la distance tôle/lampe pour chaque lampe et les différents échanges thermiques qui ont lieu lors du formage dans cette configuration.

L'invention peut faire l'objet de nombreuses variantes par rapport aux modes de réalisation décrit ci-dessus et illustrés, par exemple dans le choix des logiciels utilisés, dès lors que celles-ci restent dans le cadre défini par les revendications annexées.

**Revendications**

1. Procédé de pilotage d'une machine de formage superplastique pour l'impression d'une forme à une tôle (100), la machine comprenant

   - un couvercle (13),
   - une cuve (12),
   - une presse (11) et un joint périphérique (14) pour le maintien par pincement de la tôle (100) à sa périphérie, entre la cuve et le couvercle, et pour l'étanchéité d'une chambre de formage (15) délimitée par la tôle,
   - des organes de chauffage direct par rayonnement (1-8), agencés en regard de la tôle (100) ;
   - un conduit de gaz (16) pour la régulation de la pression dans la chambre de formage (15),
   - un automate de contrôle (17) pour le contrôle à la fois de la puissance de chauffage des organes de chauffage et de la pression dans la chambre de formage,

   le procédé étant **caractérisé en ce qu'**il comprend les étapes suivantes :

   ✓ détermination (201) d'une configuration initiale de chauffage comprenant la forme à donner, une architecture des organes de chauffage (1-8), une épaisseur de la tôle (100) avant déformation, une architecture du couvercle (13) ;
   ✓ simulation par éléments finis (202) portant sur la température de la tôle et effectuée de façon à avoir une température sensiblement homogène sur la tôle et sensiblement constante au cours du formage, pour l'obtention (204) d'une recette de formage comprenant au moins un cycle de puissance des organes de chauffage et un cycle de pression de la chambre de formage ;
   ✓ programmation (207) de l'automate de contrôle de la machine de formage superplastique en fonction de la recette de formage fournie par la simulation.

2. Procédé selon la revendication 1, **caractérisé en ce que** la simulation par éléments finis comprend, pour chaque organe de chauffage, une optimisation de la puissance de chauffage utilisant une technique choisie parmi : une introduction, dans la simulation par éléments finis, d'un correcteur PID numérique ayant comme consigne une valeur de température homogène sur la tôle ; une minimisation de la fonctionnelle des moindres carrés en flux soit par projection soit par optimisation soit en couplant les deux méthodes de minimisation précédentes afin de garantir une température homogène sur la tôle.

3. Procédé selon l'une des revendications 1 ou 2, **caractérisé en ce que**, si aucune recette de formage n'est trouvée lors de l'étape de simulation par éléments finis, la configuration initiale de chauffage est révisée (203) de façon à déterminer une nouvelle configuration, et la simulation par éléments finis est exécutée (202) à nouveau avec cette nouvelle configuration.

4. Procédé selon l'une des revendications 1 à 3, **caractérisé en ce que** l'étape de simulation comprend les phases préalables suivantes :

✔ détermination (205) de conditions limites ;
✔ détermination (206) de lois physiques relatives à des propriétés de la tôle (100) et/ou du couvercle (13) et/ou des organes de chauffage (1-8), en fonction de la configuration initiale de chauffage préalablement déterminée (201).

5. Procédé selon la revendication 4, **caractérisé en ce que** les lois physiques déterminées (206) comprennent des lois relatives au comportement thermomécanique du matériau de la tôle (100), des lois relatives aux propriétés thermo-optiques du matériau de la tôle (100) de la température ambiante à la température de formage, des lois relatives aux propriétés thermo-optiques des organes de chauffage (1-8), des lois relatives aux propriétés thermo-optiques du couvercle (13).

6. Procédé selon l'une des revendications 4 ou 5 pour le pilotage d'une machine de formage superplastique comprenant de plus une matrice logée dans la cuve (12) ou le couvercle (13) et ayant une face reproduisant la forme à donner à la tôle (100), **caractérisée en ce que** les conditions limites déterminées (205) comprennent de plus la température de la matrice (10) et les propriétés thermomécaniques du contact tôle/matrice.

7. Procédé selon l'une des revendications 1 à 6 pour le pilotage d'une machine de formage superplastique dont le couvercle (13) comprend une âme et un revêtement réflecteur (19), **caractérisé en ce que** les données relatives à l'architecture du couvercle dans la configuration initiale comprennent la nature du matériau de l'âme, ainsi que le nombre, la géométrie et la disposition des réflecteurs (19).

8. Machine de formage superplastique pour le formage d'une tôle (100) comprenant :

   - un couvercle (13),
   - une cuve (12),
   - une presse (11) et un joint périphérique (14) à la fois pour le maintien par pincement de la tôle (100) à sa périphérie, entre la cuve (12) et le couvercle (13), et pour l'étanchéité d'une chambre de formage (15) délimitée par la tôle (100),
   - des organes de chauffage direct par rayonnement (1-8), agencés en regard de la tôle (100) ;
   - un conduit de gaz (16) pour la régulation de la pression dans la chambre de formage (15),
   - un automate de contrôle (17) pour le contrôle à la fois de la puissance de chauffage des organes de chauffage (1-8) et de la pression dans la chambre de formage (15),

   **caractérisée en ce que** l'automate de contrôle (17) est programmé en fonction d'une recette de formage fournie par un procédé selon l'une des revendications 1 à 7.

**Patentansprüche**

1. Verfahren zum Steuern einer Maschine zur superplastischen Umformung zum Drucken einer Form auf ein Blech (100), wobei die Maschine aufweist

   - einen Deckel (13),
   - einen Behälter (12),
   - eine Presse (11) und eine Umfangsdichtung (14) zum Halten des Blechs (100) durch Klemmen an seinem Umfang zwischen dem Behälter und dem Deckel und zum Abdichten einer Umformkammer (15), die durch das Blech begrenzt ist,
   - Organe der Direktstrahlungsheizung (1-8), die gegenüberliegend von dem Blech (100) angeordnet sind,
   - eine Gasleitung (16) zum Einstellen des Drucks in der Umformkammer (15),
   - eine automatische Steuerung (17) sowohl zur Regelung der Heizleistung der Heizorgane als auch des Drucks in der Umformkammer,

   wobei das Verfahren **dadurch gekennzeichnet ist, dass** es die folgenden Schritte aufweist:

✓ Bestimmen (201) einer Anfangsheizkonfiguration, die die zu gebende Form, eine Architektur der Heizorgane (1 - 8), eine Dicke des Blechs (100) vor dem Verformen, eine Architektur des Deckels (13) aufweist,

✓ Simulieren durch Fertigteile (202) in Bezug auf die Temperatur des Blechs und derart durchgeführt, um eine Temperatur zu haben, die im Wesentlichen homogen auf dem Blech und im Wesentlichen konstant während des Umformens ist, zum Erhalten (204) eines Umformrezepts, umfassend mindestens einen Leistungszyklus der Heizorgane und einen Druckzyklus der Umformkammer,

✓ Programmieren (207) der automatischen Steuerung der Maschine zur superplastischen Umformung in Abhängigkeit von dem Umformrezept, das von dem Simulieren bereitgestellt wird.

2. Verfahren nach Anspruch 1, **dadurch gekennzeichnet, dass** das Simulieren durch Fertigteile für jedes Heizorgan ein Optimieren der Heizleistung aufweist, das eine Technik verwendet, die ausgewählt wird aus: einem Einführen in das Simulieren durch Fertigteile eines digitalen PID-Reglers, der als Sollwert einen homogenen Temperaturwert auf dem Blech aufweist; einem Minimieren der Funktion der kleinsten Quadrate im Fluss sowohl durch Projektion als auch durch Optimieren oder durch Verbinden der zwei vorhergehenden Verfahren zum Minimieren, um eine homogene Temperatur auf dem Blech zu gewährleisten.

3. Verfahren nach einem der Ansprüche 1 oder 2, **dadurch gekennzeichnet, dass**, wenn beim Schritt des Simulierens durch Fertigteile kein Umformrezept gefunden wird, die Anfangsheizkonfiguration derart revidiert wird (203), um eine neue Konfiguration zu bestimmen, und das Simulieren durch Fertigteile erneut mit dieser neuen Konfiguration durchgeführt wird (202).

4. Verfahren nach einem der Ansprüche 1 bis 3, **dadurch gekennzeichnet, dass** der Schritt des Simulierens die folgenden vorausgehenden Phasen aufweist:

✓ Bestimmen (205) von Grenzbedingungen,

✓ Bestimmen (206) von physikalischen Gesetzen in Bezug auf Eigenschaften des Blechs (100) und/oder des Deckels (13) und/oder der Heizorgane (1-8) in Abhängigkeit von der zuvor bestimmten Anfangsheizkonfiguration (201).

5. Verfahren nach Anspruch 4, **dadurch gekennzeichnet, dass** die bestimmten physikalischen Gesetze (206) Gesetze in Bezug auf das thermomechanische Verhalten des Materials des Blechs (100), Gesetze in Bezug auf die thermooptischen Eigenschaften des Materials des Blechs (100) von der Umgebungstemperatur zur Umformungstemperatur, Gesetze in Bezug auf die thermooptischen Eigenschaften der Heizorgane (1-8), Gesetze in Bezug auf die thermooptischen Eigenschaften des Deckels (13) aufweisen.

6. Verfahren nach einem der Ansprüche 4 oder 5 zum Steuern einer Maschine zur superplastischen Umformung, ferner umfassend eine Matrize, die in dem Behälter (12) oder dem Deckel (13) untergebracht ist und eine Seite aufweist, die die Form wiedergibt, die dem Blech (100) zu geben ist, **dadurch gekennzeichnet, dass** die bestimmten Grenzbedingungen (205) ferner die Temperatur der Matrize (10) und die thermomechanischen Eigenschaften des Blech/Matrize-Kontakts aufweisen.

7. Verfahren nach einem der Ansprüche 1 bis 6 zum Steuern einer Maschine zur superplastischen Umformung, deren Deckel (13) einen Kern und eine reflektierende Beschichtung (19) aufweist, **dadurch gekennzeichnet, dass** die Daten in Bezug auf die Architektur des Deckels in der Anfangskonfiguration die Art des Materials des Kerns und die Anzahl, die Geometrie und die Anordnung der Reflektoren (19) aufweisen.

8. Maschine zur superplastischen Umformung zum Umformen eines Blechs (100), umfassend:

- einen Deckel (13),
- einen Behälter (12),
- eine Presse (11) und eine Umfangsdichtung (14) sowohl zum Halten des Blechs (100) durch Klemmen an seinem Umfang zwischen dem Behälter und dem Deckel (13) als auch zum Abdichten einer Umformkammer (15), die durch das Blech begrenzt ist (100),
- Organe der Direktstrahlungsheizung (1-8), die gegenüberliegend von dem Blech (100) angeordnet sind,
- eine Gasleitung (16) zum Einstellen des Drucks in der Umformkammer (15),
- eine automatische Steuerung (17) sowohl zur Regelung der Heizleistung der Heizorgane (1-8) als auch des Drucks in der Umformkammer (15),

**dadurch gekennzeichnet, dass** die automatische Steuerung (17) in Abhängigkeit von einem Umformrezept programmiert ist, dass durch ein Verfahren nach einem der Ansprüche 1 bis 7 bereitgestellt wird.

**Claims**

1. A method of controlling a superplastic forming machine for imprinting a shape on a metal sheet (100), the machine comprising

   - a cover (13),
   - a tank (12),
   - a press (11) and a peripheral seal (14) for the gripping of the sheet (100) by clamping at its periphery, between the tank and the cover, and for sealing a forming chamber (15) delimited by the sheet,
   - direct radiant heating members (1-8), arranged facing the sheet (100);
   - a gas conduit (16) for regulating the pressure in the forming chamber (15).
   - a programmable controller (17) for controlling both the heating power of the heating members and the pressure in the forming chamber,

   the method being **characterized in that** it comprises the following steps:

   ✓ determining (201) an initial heating configuration comprising the shape to be given, an architecture of the heating members (1-8), a thickness of the metal sheet (100) before deformation, an architecture of the cover (13);
   ✓ performing a finite-element simulation (202) relating to the temperature of the metal sheet and performed in such a way as to have a temperature that is substantially consistent across the metal sheet and substantially constant during forming, in order to obtain (204) a forming specification comprising at least one cycle of powering the heating members and one cycle of pressure of the forming chamber;
   ✓ programming (207) of the programmable controller of the superplastic forming machine according to the forming specification provided by the simulation.

2. The method according to claim 1, **characterized in that** the finite-element simulation comprises, for each heating member, an optimization of the heating power using a technique chosen from: an introduction, in the finite-element simulation, of a digital PID corrector having as setting a consistent temperature value on the metal sheet; a minimization of the least squares functional in flows either by projection or by optimization or by combining the two preceding minimization methods in order to guarantee a consistent temperature on the metal sheet.

3. The method according to one of claims 1 or 2, **characterized in that**, if no forming specification is found during the finite-element simulation step, the initial heating configuration is revised (203) in such a way as to determine a new configuration, and the finite-element simulation is performed (202) again with this new configuration.

4. The method according to one of claims 1 to 3, **characterized in that** the simulation step comprises the following preliminary phases:

   ✓ determination (205) of limit conditions;
   ✓ determination (206) of physical laws relating to the properties of the metal sheet (100) and / or of the cover (13) and / or of the heating members (1-8), according to the initial heating configuration previously determined (201).

5. The method according to claim 4, **characterized in that** the determined physical laws (206) include laws relating to the thermomechanical behavior of the material of the metal sheet (100), laws relating to the thermo-optical properties of the material of the metal sheet (100) from ambient temperature to forming temperature, laws relating to the thermo-optical properties of heating members (1-8), laws relating to the thermo-optical properties of the cover (13).

6. The method according to one of claims 4 or 5 for controlling a superplastic forming machine further comprising a die housed in the tank (12) or the cover (13) and having a face reproducing the shape to be given to the metal sheet (100), **characterized in that** the determined limit conditions (205) further include the temperature of the die (10) and the thermomechanical properties of the metal sheet / die contact.

**7.** The method according to one of claims 1 to 6 for controlling a superplastic forming machine which cover (13) comprises a core and a reflective coating (19), **characterized in that** the data relating to the architecture of the cover in the initial configuration include the nature of the material of the core, as well as the number, the geometry and the arrangement of reflectors (19).

**8.** A superplastic forming machine for the forming of a sheet (100) comprising:

- a cover (13),
- a tank (12),
- a press (11) and a peripheral seal (14) both for gripping the metal sheet (100) by clamping at its periphery, between the tank (12) and the cover (13), and for sealing of a forming chamber (15) delimited by the metal sheet (100),
- direct radiant heating members (1-8), arranged so as to face the metal sheet (100);
- a gas conduit (16) for regulating the pressure in the forming chamber (15),
- a programmable controller (17) for controlling both the heating power of the heating members (1-8) and the pressure in the forming chamber (15),

**characterized in that** the programmable controller (17) is programmed according to a forming specification provided by a method according to one of claims 1 to 7.

Fig. 1

10

17    16                                    11

13

8    7    6    5    1    2    4

19

3

14

15    19

100

12

y

10    z    x

Fig. 2

Fig. 3

Analyse de réponse du système
en boucle ouverte et détermination
de l'équation de transfert/perturbations
du procédé

Révision de la fonction de
transfert si la sollicitation
est mal modélisée

Modélisation sous SciLab et
propositions de paramètres PID

Réponse
identique avec
le programme de PID
Abaqus©

Non

Oui

Complexification de la
sollicitation du modèle

Non

Réponse
identique avec
le programme de PID
Abaqus©

Oui

Fig. 4

Simulation de formage avec
formulation PID retenue

Lire la température à
la verticale des lampes

Programme
USDFLD : permet de
lire les températures en cours
de calcul éléments
finis

Calculer la différence
cible/valeur relevée, $\int$,
$\partial/\partial t$, stocker dans **En**

Programme
UEXTERNALDB : permet
de lire les données dans le
fichier texte
Enp.txt

Calculer la consigne
en amplitude flux,
stocker dans **Fcom**

25<Fcom(i)<70?

Fc(i)=Fcom(i)

Fc(i)=25 ou 70

Stocker **En** dans un
fichier pour l'incrément
suivant

Programme
UEXTERNALDB : permet
d'écrire les **En** dans le fichier
texte Enp.txt

Stocker **Fc** dans un
fichier pour l'incrément
suivant

Fcp.txt

Calculer le flux en chaque
point de la surface supérieure de
la tôle à partir des **Fc** calculés

Programme
DFLUX :
Amp.txt

## Fig. 5

Fig. 6

Fig. 7

Fig. 8

Fig. 9

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060086774 A
- US 5410132 A
- US 4474044 A

- US 20030000275 A
- EP 703019 A